# EUROPEAN PATENT SPECIFICATION

(11) **EP 2 431 506 B1**
(45) Date of publication and mention of the grant of the patent: **01.04.2015**
(21) Application number: 10425311.7
(22) Date of filing: 20.09.2010
(51) Int. Cl.: B68G 7/12, D03D 3/00, B60N 2/58, A47C 31/02

(54) **Fabric tape with visual matching elements**
Stoffband mit visuell übereinstimmenden Elementen
Bande d'étoffe avec des éléments de correspondance visuelle

(43) Date of publication of application: 21.03.2012
(73) Proprietor: FILMAR S.r.l., 10072 Caselle Torinese (TO) (IT)
(72) Inventor: Martinetto, Filiberto, 10072 Caselle Torinese (TO) (IT)
(74) Representative: Di Gennaro, Sergio

(56) References cited:
- EP-A1- 1 504 698
- EP-A1- 2 228 472
- DE-A1- 4 223 760
- GB-A- 522 406
- GB-A- 820 310
- GB-A- 962 775
- GB-A- 2 097 240
- US-A- 1 606 357

## Description

The present invention relates to the field of tapes and in detail it is related to a fabric tape with visual matching elements.

It is known that fabric tapes can be used in various fields, among which there is the completion of the upholstery of armchairs, chairs or seats.

In this case, a fabric tape is sewn on the border of an upholstery or covering for armchairs, chairs or seats, in such a way as to act as perimeter element. Typically, to this tape are detachably fixed some tie rods, arranged in hidden position under the armchair, the chair or the seat, in such a way as to keep the upholstery in stretched position.

These tie rods are usually realized in form of fabric tape, with very reduced size with respect to the perimeter tape; these are also provided at the two ends with eyelets or fastening hooks to the tape itself.

The keeping under tension of the upholstery has not only an esthetical importance (in particular regarding armchairs or chairs) but also a safety importance (particularly regarding the seats designed for the use on cars).

In light of the natural trend for mass-production of armchairs, chairs and seats, in order to realize the highest possible productive economy, the abovementioned coverings are realized in standard sizes and this also applies to the tie rods for the stretching of the coverings themselves. These tie rods are also positioned always in the same positions, in order to ensure the homogeneity of presentation of armchairs, chairs or seats between a model and the other.

Nowadays, in order to fix the tie rods always in the same position, the fabric tapes are provided with cut visual matching elements, so that during the assembly it is possible to assemble these tie rods in an easier way, reaching therefore a more precise positioning.

From EP2228472 A it is known a fabric tape comprising a plurality of visual matching elements positioned on the lateral end of the tape itself; the visual matching elements are realized in a single production step by a loom (10) for the production of the tape and are realized in stretched fabric, in order to avoid that they can get entangled during the insertion in the seat in particular if they are floating.

From DE102006028210 B it is known a tape comprising connecting eyelets with rigid and preferably metallic elements of a chair or seat.

DE102006028210 B shows some disadvantages deriving from the fact that the connecting eyelets must be realized with a long production process, ineffective both in terms of time and of costs and are separated by a stretching element of the tape itself.

Furthermore, the visual matching elements are not perfectly associated to the position of the eyelets, with the risk of a missed insertion of the hooking element (present for example on a seat of a motor vehicle) on the eyelet itself, or of skipping an eyelet in the series during the coupling with the hooking elements.

Eventually, the distance among the visual matching elements, positioned on a first side of the tape, and the eyelets, on the contrary positioned on an opposite side, often causes the risk of confusion.

It's also known from the patent GB522,406a curtain tape a is woven with spaced apart loops for hooks, and has draw-cords threading through the main tape entirely behind the hook loops If the main tape is hollow, the cords may pass inside the web. The loops may be of a different weave or color than the main tape. The main tape may be open behind the hook-loops, between the points where the cords are threaded.

Therefore, the purpose of the present invention is to describe a fabric tape with visual matching elements that is free from the above described disadvantages and that is economically advantageous to be produced.

According to the present invention, a fabric tape is made with visual matching elements as claimed in the first claim.

According to the present invention, a loom is made for the production of a fabric tape with visual matching elements as claimed in the fourteenth claim.

The invention will be now described with reference to the appended drawings, that illustrate a not restrictive example of embodiment, wherein:
- Figure 1 shows a first perspective view of a tape object of the present invention in a first embodiment;
- Figure 2 shows a sectional view of the tape object of the present invention along lines II-II of figure 1;
- Figure 3 shows a second perspective view of a tape object of the present invention in a second embodiment; and
- Figure 4 shows a sectional view of the tape object of the present invention along lines IV-IV of figure 3.

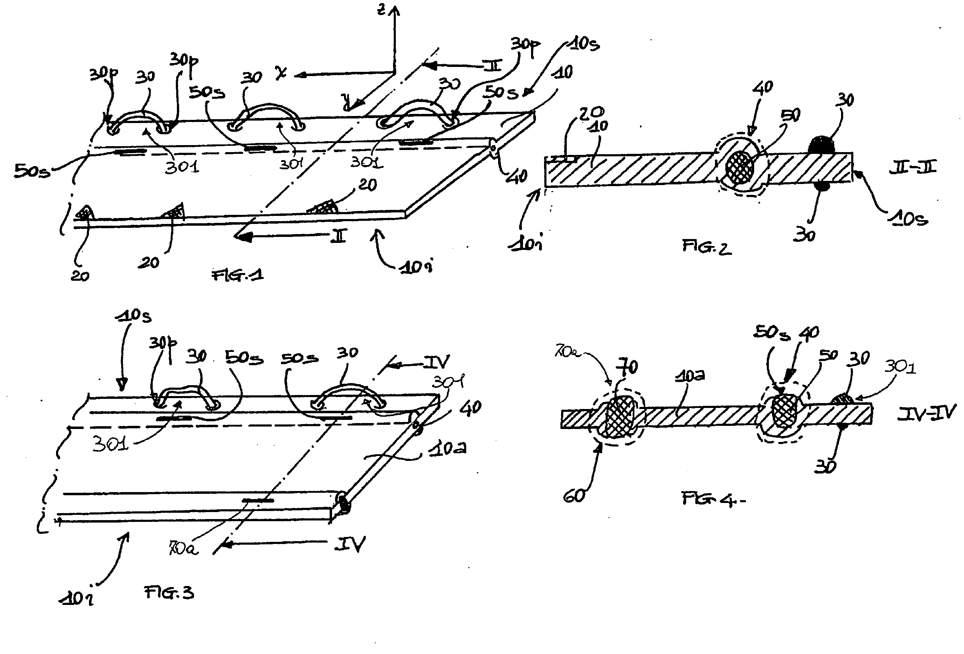

With reference to figure 1, a fabric tape with visual matching elements is generally designated with the reference number 10, 10a.

Tape 10, 10a is realized in fabric and comprises a upper face and a lower face which extend along a plane identified by a first axis X and a second axis Y; the first axis X, for convention of representation in the appended figures, shows the axis of higher extension of the tape, or longitudinal axis.

Tape 10, 10a, both in its first and in the second embodiment, comprises a flexible stretching rope 30, positioned in correspondence to a first side 10s and substantially oriented parallely with respect to the first axis X.

More in detail, flexible stretching rope 30 passes from the first to the second face of the tape by inserting and exiting from a plurality of eyelets 30p equi-distanced among them. Substantially, once mounted, flexible stretching rope 30 identifies first and second tracts that respectively are visible alternatively on the upper and lower face of the tape itself.

Appropriate hooking means of the tape, not shown in the appended figures, are inserted in the button holes 301 that form rightly between flexible stretching rope 30 and the body of the tape, allowing then for fixing it to the body of a seat, of a chair, of an armchair or similar objects.

As a matter of fact, to the tape object of the present invention is typically constrained the covering of a seat, that must be then constrained and tensioned on the body of the seat itself. Flexible stretching rope 30 allows then for both the constraint of the lining to the body of the seat, chair or armchair, and on the other, through its tension, the stretching of the tape itself without the help of auxiliary eyelets for the insertion of hooking means.

As shown in figures 1 and 2, tape 10, 10a object of the present invention comprises also a first tubular section 40, positioned parallely with respect to axis X, within which it is positioned a first cord 50 partially visible in a plurality of sections 50s only on the upper face of tape 10, 10a. Also these sections are positioned along the axis X and are positioned in correspondence to the first tracts of flexible stretching rope 30.

In particular, for allowing the visibility of these sections - which become then real markers of hooking zones or anyway visual matching elements of the exact position wherein the hooking elements must insert in the button holes 301 formed between flexible stretching rope 30 and the body of tape 10, 10a - are realized in a color different and possibly contrasting with respect to the one of the body of the tape object of the present invention.

In detail the first tubular section 40, if observed in direction of the second axis Y, has a distance from the first side (105) shorter than the distance that separates it from the second side (10i).

In its first embodiment, tape 10 object of the present invention comprises also a plurality of visual matching elements 20, positioned on the upper face and realized with a not loose (or floating) fabric fibers but narrowed woven; this plurality of visual matching elements 20 is positioned in correspondence to the second side (10i) of tape 10. Thanks to the fact that they are woven in such a way as to remain tensioned, and not floating, and not protruding therefore from the remaining part of the body of tape 10 along an axis Z perpendicular with respect to both axis X and to axis Y, visual matching elements 20 do not risk to get entangled with the fibers during the use.

Also visual matching elements 20 are positioned in correspondence to sections 50s, in such a way as to be aligned with these ones along the second axis Y.

A second embodiment of tape 10a object of the present invention, shown in figures 3 and 4, differs from the one previously described because instead of visual matching elements 20 there is a second tubular section 60 arranged parallel to axis X within which there is a second cord 70, partially visible in a plurality of second sections 70a.

Second sections 70a are regularly spaced out, exactly as it happens for sections 50s of the first cord but, unlike these, second sections 70a appear, preferably, both on the upper and on the lower face of tape 10a, even if it is possible as alternative to make them appear on a single face.

Exactly as it happens for first cord 50, also second cord 70 is realized in a color different and contrasting with respect to the remaining part of tape 10a.

In detail second tubular section 60, if observed in direction of the second axis Y, has a distance that separates it from the second side.

The tape object of the present invention can be produced in a single production process on a loom specifically designed or set up for its production, allowing therefore for a reduction of the production time.

Both flexible stretching rope 30 and the first, second cord 50, 70 are inserted respectively in eyelets 30p and in the first, second tubular section 40, 60 after the completion of the weaving of tape 10, 10a.

To the device previously described it can be applied variants, changes and additions obvious for a those skilled in the art, without departing from the protective scope of the present invention given by the attached claims.

As an example, the tape and second cord 70 can have the same color.

## Claims

1. Fabric tape (10, 10a) comprising a upper face and a lower face which extend along a plane identified by a first axis X and a second axis Y; said tape is able to be constrained to a covering of a seat which than is able to be constrained and tensioned on the body of the seat;
said tape (10,10a) comprises a flexible stretching rope (30) positioned in correspondence to a first side (10s) of the tape (10, 10a) and substantially oriented parallel with respect to said first axis (X) of maximum extension of said tape (10, 10a);
said flexible stretching rope (30) enters and exits, alternatively from said two faces of the tape, from a plurality of equal-distanced eyelets (30p) of said tape (10, 10a); and is alternatively visible, for respective sections, on said two faces;
said flexible stretching rope (30) and said upper face of the tape (10, 10a) form a plurality of buttonholes (301);
said tape (10, 10a) also comprises a tubular section (40), positioned parallel with respect to said axis (X), within which it is positioned a first cord (50) partially visible in a plurality of first sections (50s) only on the upper face of the tape (10, 10a) which become first visual matching element of the exact position wherein the hooking elements are insertable in the buttonholes (301) and said plurality of first sections (50s) are realized in a color different with respect to the tape (10,10a);
said tubular section (40) is positioned between said first side (10s) and a second side (10i), at a distance from the first side (10s) lower than the distance from said second side (10i), with respect to a second axis (Y);
said tape (10, 10a) also comprises a second visual matching elements (20) positioned along said first axis (X), upon said upper face in correspondence to said second side (10i) realized with fabric fibers woven in a narrow way on said tape (10);
said second visual matching element (20) are positioned in correspondence to first sections (50s) in such a way as to be aligned with those ones along said second axis (Y), or instead of said second visual matching elements (20) there is a second tubular section (60),arranged parallel to the first axis (X) within which there is a second cord (70) partially visible in a plurality of second section (70a).

2. Tape according to claim 1, wherein said second cord (70), is partially visible in a plurality of second sections(70a) upon said upper face and said lower face;

3. Tape according to claim 2, wherein said tape (10,10a) has a first color and said second cord (70) has a second color different from said first color.

4. Tape according to claim 1, in which:
• said stretching rope (30) are inserted in the eyelets (30p) and
• said first and second cord (50, 70) are inserted respectively in the second and first tubular section (40, 60);
after the completion of the weaving of the tape (10, 10a).

5. Tape according to claim 1, in which said tape (10, 10a) on a first side (10s) is fixable to hooking means, and is sewable on a second side (10i) on the border of an upholstery or covering, in such a way as to act as perimeter element.

## Patentansprüche

1. Textilband (10, 10a), eine Oberseite und eine Unterseite umfassend, die sich entlang einer Ebene erstrecken, die durch eine Erste Achse X und eine zweite Ache Y gekennzeichnet ist, wobei das Band in eine Abdeckung eines Sitzes gezogen sein kann, der auf den Körper des Sitzes gezogen und festgespannt werden kann,
wobei das Band (10, 10a) ein flexibles dehnbares Seil (30) umfasst, das in Übereinstimmung mit einer ersten Längsseite (10s) des Bandes (10, 10a) positioniert und im Wesentlichen parallel zur ersten Achse (X) der maximalen Ausdehnung des Bandes (10, 10a) ausgerichtet ist,
wobei das flexible dehnbare Seil (30) an zwei Seiten des Bandes in bzw. aus mehreren gleichmäßig beabstandeten Ösen (30p) des Bandes (10, 10a) abwechselnd ein- und austritt und an entsprechenden Abschnitten auf den zwei Seiten abwechselnd sichtbar ist,
wobei das flexible dehnbare Seil (30) und die Oberseite des Bandes (10, 10a) mehrere Knopflöcher (301) bilden,
wobei das Band (10, 10a) außerdem einen schlauchförmigen Abschnitt (40) umfasst, der parallel zur Achse (X) angeordnet ist und in dem eine erste Schnur (50) angeordnet ist, die in mehreren ersten Abschnitten (50s) nur auf der Oberseite des Bandes (10, 10a) sichtbar ist und zu ersten sichtbaren Passelementen der genauen Position wird, an der die Hakenelemente in die Knopflöcher (301) eingesetzt werden können, und wobei die mehreren ersten Abschnitte (50s) in einer anderen Farbe ausgeführt sind als das Band (10, 10a),
wobei der schlauchförmige Abschnitt (40) zwischen der ersten Längsseite (10s) und einer zweiten Längsseite (10i) angeordnet ist, im Verhältnis zu einer zweiten Achse (Y) in einem Abstand zur ersten Längsseite (10s), der kleiner ist als der Abstand zur zweiten Längsseite (10i),
wobei das Band (10, 10a) außerdem zweite sichtbare Passelemente (20) umfasst, die entlang der ersten Achse (X) auf der Oberseite in Übereinstimmung mit der zweiten Längsseite (10i) angeordnet und mit Textilfasern ausgeführt sind, die in dichter Weise in das Band (10) gewebt sind,
wobei die zweiten sichtbaren Passelemente (20) derart in Übereinstimmung mit ersten Abschnitten (50s) angeordnet sind, dass sie an denen entlang der zweiten Achse (Y) ausgerichtet sind, oder statt der zweiten sichtbaren Passelemente (20) ein zweiter schlauchförmiger Abschnitt (60) vorhanden ist, der parallel zur ersten Achse (X) angeordnet ist, und in dem eine zweite Schnur (70) in mehreren zweiten Abschnitten (70a) teilweise sichtbar ist.

2. Band nach Anspruch 1, wobei die zweite Schnur (70) auf der Oberseite und der Unterseite in mehreren zweiten Abschnitten (70a) teilweise sichtbar ist.

3. Band nach Anspruch 2, wobei das Band (10, 10a) eine erste Farbe und die zweite Schnur (70) eine zweite Farbe aufweist, die sich von der ersten Farbe unterscheidet.

4. Band nach Anspruch 1, wobei nach Abschluss des Webens des Bandes:
das dehnbare Seil (30) in die Ösen (30p) eingesetzt wird und
die erste und die zweite Schnur (50, 70) in den ersten beziehungsweise den zweiten schlauchförmigen Abschnitt (40, 60) eingesetzt wird.

5. Band nach Anspruch 1, wobei das Band (10, 10a) an einer ersten Längsseite (10s) an Hakenmitteln fixierbar ist und an einer zweiten Längsseite (10i) derart an den Rand einer Polsterung oder Abdeckung genäht werden kann, dass es als Umfassungselement dient.

## Revendications

1. Ruban en tissu (10, 10a) comprenant une face supérieure et une face inférieure qui s'étendent le long d'un plan identifié par un premier axe X et un second axe Y ; ledit ruban est capable d'être fixé à un revêtement d'un siège qui alors est capable d'être fixé et tendu sur le corps du siège ;
ledit ruban (10, 10a) comprend un cordon d'étirage flexible (30) positionné en correspondance à un premier côté (10s) du ruban (10, 10a) et sensiblement orienté parallèlement par rapport audit premier axe (X) d'extension maximum dudit ruban (10, 10a) ;
ledit cordon d'étirage flexible (30) entre et sort, en alternance à partir desdites deux faces du ruban, à partir d'une pluralité d'oeillets, séparés de façon égale, (30p) dudit ruban (10, 10a) ; et est visible en alternance, pour des sections respectives, sur lesdites deux faces ;
ledit cordon d'étirage flexible (30) et ladite face supérieure du ruban (10, 10a) forment une pluralité de boutonnières (301) ;
ledit ruban (10, 10a) comprend également une section tubulaire (40), positionnée parallèlement par rapport audit axe (X), à l'intérieur de laquelle est positionnée une première corde (50) partiellement visible dans une pluralité de premières sections (50s) seulement sur la face supérieure du ruban (10, 10a) qui deviennent des premiers éléments assortis visuellement de la position exacte dans laquelle les éléments d'accrochage sont insérables dans les boutonnières (301) et ladite pluralité de premières sections (50s) sont réalisées en une couleur différente par rapport au ruban (10, 10a) ;
ladite section tubulaire (40) est positionnée entre ledit côté (10s) et un second côté (10i), à une distance à partir du premier côté (10s) inférieure à la distance à partir dudit second côté (10i), par rapport à un second axe (Y) ;
ledit ruban (10, 10a) comprend également des seconds éléments assortis visuellement (20) positionnés le long dudit axe (X), sur ladite face supérieure en correspondance audit second côté (10i) réalisés avec des fibres de tissu tissées de manière étroite sur ledit ruban (10) ;
lesdits seconds éléments assortis visuellement (20) sont positionnés en correspondance à des premières sections (50s) de manière telle à être alignés avec ceux le long dudit second axe (Y), ou, à la place desdits seconds éléments assortis visuellement (20), il y a une seconde section tubulaire (60), agencée parallèlement au premier axe (X) à l'intérieur de laquelle il y a une seconde corde (70) partiellement visible dans une pluralité de secondes sections (70a).

2. Ruban selon la revendication 1, dans lequel ladite seconde corde (70) est partiellement visible dans une pluralité de secondes sections (70a) sur ladite face supérieure et ladite face inférieure.

3. Ruban selon la revendication 2, dans lequel ledit ruban (10, 10a) possède une première couleur et ladite seconde corde (70) possède une seconde couleur différente de ladite première couleur.

4. Ruban selon la revendication 1, dans lequel :
- ledit cordon d'étirage (30) est inséré dans les oeillets (30p), et
- lesdites première et seconde cordes (50, 70) sont insérées respectivement dans les seconde et première sections tubulaires (40, 60) ;
après l'achèvement du tissage du ruban (10, 10a).

5. Ruban selon la revendication 1, dans lequel ledit ruban (10,10a)sur un premier côté (10s) est fixé à des moyens d'accrochage, et est cousu sur un second côté (10i) sur la bordure d'un tissu d'ameublement ou un habillage, de manière telle à servir d'élément périmétrique.
